# EUROPEAN PATENT APPLICATION

(11) **EP 4 624 282 A1**
(43) Date of publication of application: **01.10.2025**
(21) Application number: 25166226.8
(22) Date of filing: 26.03.2025
(51) Int. Cl.: B60S 1/34, B60S 1/38, B60S 1/52

(54) **FLEXIBLE WIPER FOR A MOTOR VEHICLE**

(30) Priority: 28.03.2024 IT 202400006952; 27.08.2024 IT 202400019270
(71) Applicant: FERRARI S.p.A., 41100 Modena (IT)
(72) Inventor: DE PAOLI, Alessandro Paolo, 41100 MODENA (IT); GALAFASSI, Stefano, 41100 MODENA (IT); VITALONI, Francesco, 41100 MODENA (IT)
(74) Representative: Studio Torta S.p.A.

(57) **Abstract**

A wiper (4) for a motor vehicle (1), the wiper (4) extending along a longitudinal direction (A) from a first end portion (5) configured to be pivotally coupled to a body (6) of the motor vehicle (1) and ending with a second end portion (7) opposite the first end portion (5) according to the longitudinal direction (A), wherein the wiper (4) comprises a support body (15) and a wiper blade (8) comprising a wiper frame (9) and a blade (10) carried by the wiper frame (9) and suitable for sliding in contact on a window (2) of the motor vehicle (1), characterized in that the wiper frame (9) is cantilevered to the support body (15) according to the longitudinal direction (A), comprises the second end portion (7), and is more flexible than the support body (15).

## Description

### CROSS-REFERENCE TO RELATED APPLICATIONS

This patent application claims priority from Italian patent application no. 102024000006952 filed on March 28, 2024, and from Italian patent application no. 102024000019270 filed on August 27, 2024, the entire disclosure of which is incorporated herein by reference.

### TECHNICAL FIELD

The invention relates to a wiper for a motor vehicle, more in particular for cleaning a windshield of the motor vehicle.

### PRIOR ART

In the automotive industry, various models of wipers are known, for example for cleaning the windshield or the rear window of a motor vehicle.

Usually, the windshield has a variable curvature along its outer surface, whereby the wiper must have a degree of flexibility so that the wiper blade can always remain adherent to the windshield during the entire angular excursion of the wiper.

A classic example of a wiper with such an adhesion characteristic comprises a first rigid arm pivotally coupled to the body and a second more flexible arm elastically coupled to the first arm by means of helical torsion springs.

The second arm is coupled to the wiper blade in the area of an intermediate portion thereof between two opposite ends along a direction of extension of the wiper blade.

The wiper blade is pushed towards the windshield by the pre-load of the helical springs, whose elastic reaction, therefore, counters a movement of the wiper blade away from the outer surface of the windshield.

In this way, the elastic reaction of the helical springs represents what guarantees the flexibility and adherence to the windshield of the wiper.

On the other hand, the presence of the springs and of at least three articulated elements coupled to one another, namely the wiper blade, the first arm and the second arm, may represent an inconvenience in terms of the complexity and aesthetic impact of the wiper.

Therefore, especially in the field of high-end or luxury vehicles, there is a need to improve known wipers, in particular by reducing their complexity and overall dimensions, while maintaining the flexibility necessary to ensure the adherence of the wiper blade on the windshield during the entire angular excursion of the wiper.

In other words, the drawbacks of known wipers need to be overcome.

An object of the invention is to fulfil at least one of the needs discussed above, preferably in a simple and reliable fashion.

### DESCRIPTION OF THE INVENTION

Said object is reached by a wiper as defined in claim 1.

The dependent claims define special embodiments of the invention.

### BRIEF DESCRIPTION OF THE DRAWINGS

Hereinafter, an embodiment of the invention will be described, in order to allow the latter to be better understood, by way of non-limiting example and with reference to the accompanying drawings, wherein
- figure 1 is a perspective view of a motor vehicle comprising a wiper according to an embodiment of the invention,
- figure 2 is a perspective view of the wiper of figure 1, with the enlargement of a detail portion,
- figure 3 is a plan view of the wiper of figure 1;

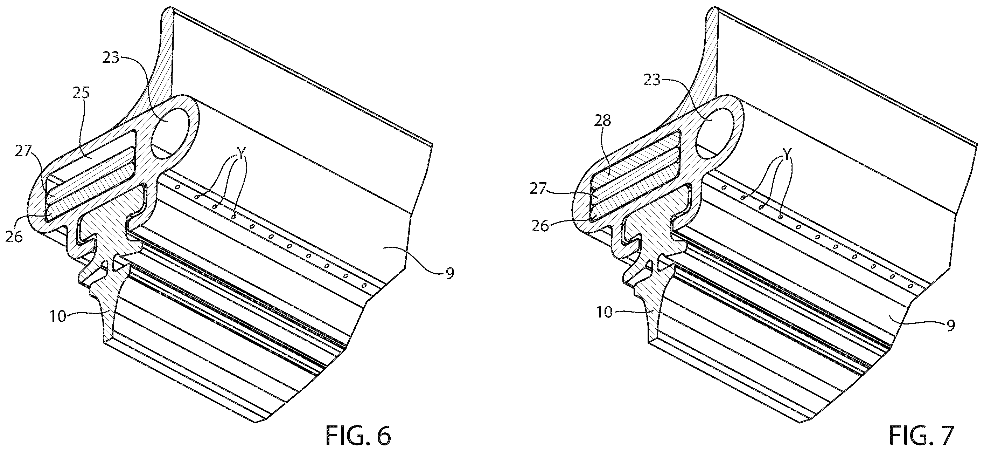

- figures 4-7 are cut views of the wiper of figure 1 according to section planes indicated by lines IV-IV, V-V, VI-VI and VII-VII, respectively, in figure 3,
- figure 8 is a partial perspective view of a wiper according to a further embodiment of the invention,
- figures 9-10 are cut views of the wiper of figure 8 according to section planes indicated by lines IX-IX and X-X, respectively,
- figure 11 is a partial perspective view of a wiper according to a further embodiment of the invention,
- figures 12-13 are cut views of the wiper of figure 11 according to section planes indicated by lines XII-XII and XIII-XIII, respectively,
- figure 14 is a partial perspective view of a wiper according to a further embodiment of the invention, and
- figures 15-16 are cut views of the wiper of figure 14 according to section planes indicated by lines XV-XV and XVI-XVI, respectively.

### EMBODIMENTS OF THE INVENTION

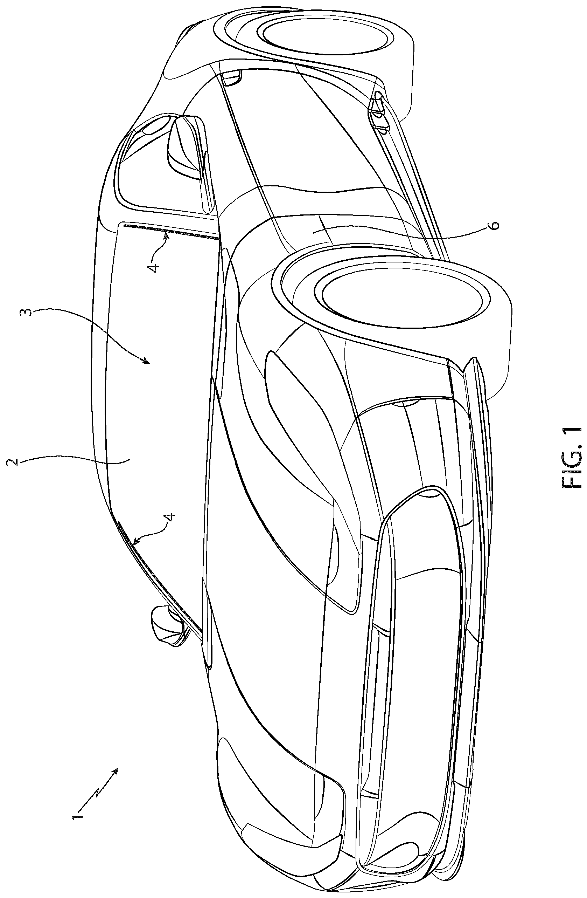

In figure 1, reference number 1 is used to indicate, as a whole, a vehicle, specifically a motor vehicle, in particular a sports or racing motor vehicle.

The vehicle 1 comprises a window, for example a windshield 2 or a rear window (not shown), having an outer surface 3, namely a surface facing outwards from the vehicle 1.

The vehicle 1 comprises a wiper 4, specifically for wiping the windshield 2 or, more precisely, the outer surface 3 thereof.

This is not necessarily limiting, as the wiper 4 could be used to wipe another type of window, for example the rear window. Therefore, hereinafter, the windshield 3 may be conceptually replaceable with the rear window or another window in general.

The wiper 4 has a first end portion 5, which is hinged or pivotally coupled to a body 6 of the vehicle 1, so that it can rotate relative to the body around a hinge axis K.

In addition, the wiper 4 substantially extends from the end portion 5 until it ends with a second end portion 7 (opposite the end portion 5) along a longitudinal direction or length direction A.

The longitudinal direction A specifically is curved.

The extension of the wiper 4 according to the longitudinal direction A is greater than the dimensions of the wiper 4 according to directions that are transversal relative to the longitudinal direction A.

In other words, the wiper 4 is an oblong member according to the longitudinal direction A, with a length along the longitudinal direction A that is significantly greater than the other dimensions of the wiper 4.

The wiper 4 comprises a wiper blade 8, which includes or comprises the second end portion 7.

The wiper blade 8 comprises a wiper frame 9 and a blade 10 configured or suitable for sliding in contact on the window, that is, specifically, on the windshield 2 or, more precisely, on the outer surface 3 thereof.

The blade 10 is carried by the wiper frame 9, for example in known ways that are not described in detail. The blade 10 has an end 11 attached to the blade frame 9 and a free end 12 intended to remain adherent to the outer surface 3 and to slide on the outer surface 3 to wipe the windshield 2.

The blade 10 comprises and, more in particular, is made of an elastomer material adapted to wipe the windshield 2 by rubbing on the outer surface 3.

The wiper blade 8 is fixed relative to the first end portion 5.

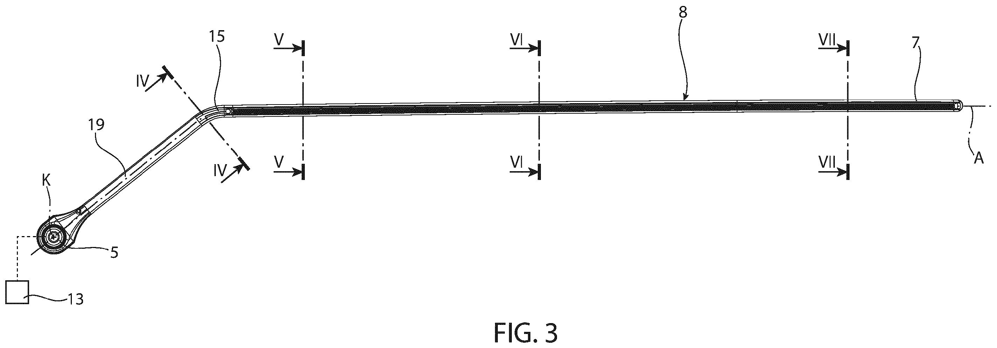

The vehicle 1 comprises an actuator 13, schematically shown in figure 3, which is configured to cause the rotation of the first end portion 5 and, therefore, also of the wiper blade 8 around the hinge axis K. The wiper blade 8 is arranged with the blade 10 adhering to the outer surface 3 or, more in particular, such that the blade 10 adheres to the outer surface 3 during the rotation around the hinge axis K. Herein, the wiper blade 8 has an angular excursion, during which the blade 10 rubs on the outer surface 3, thus wiping the windshield 2.

Between the first end portion 5 and the wiper blade 8, according to the longitudinal direction A, the wiper 4 comprises a support body 15.

The wiper frame 9 is more flexible than the support body 15, in particular so as to be deformable relative to the support body 15. The flexibility of the wiper frame 9 is such that it can adapt to a variability in the curvature of the windshield 2 during the angular excursion of the wiper blade 8 with the blade 10 adhering to the outer surface 3.

In other words, the wiper frame 9 deforms due to the variability in the curvature of the windshield 2. The curvature of the wiper frame 9 adapts to the curvature of the windshield 2; namely, the curvature of the wiper frame 9 varies during the angular excursion of the wiper blade 8 while remaining the same as the curvature of the windshield 2 in the area of contact between the blade 10 and the outer surface 3.

The deformation of the wiper frame 9 during the angular excursion of the wiper blade 8 is elastic, so it is not permanent.

The wiper frame 9 extends along the longitudinal direction A between the second end portion 7, defining an end of the wiper frame 9, and an end 16 attached to the support body 15.

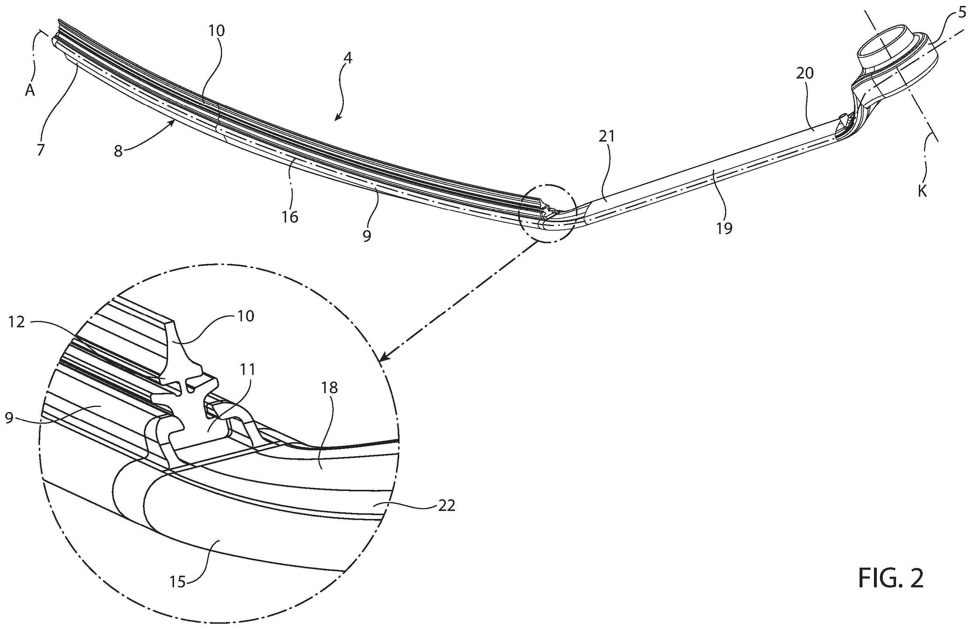

For example, like in the embodiment of figures 2-4, the end 16 is attached with an interference coupling to a cavity of the support body 15, in particular while remaining removable from the support body 15 by pulling the end 16 along the longitudinal direction A, more in particular with an effort such as to overcome the interference between the end 16 and the support body 15. As it will also be clearer from the further embodiments that will be described below, alternative couplings are in any case possible, such as for example by means of one or more releasable fixing devices, such as threaded devices, snap coupling systems and the like.

The wiper frame 9 is cantilevered to the support body 15 according to the longitudinal direction A. In other words, at least with regard to the embodiment of figures 2-4, the wiper frame 9 extends from the support body 15 protruding relative to the support body 15 along the longitudinal direction A. More precisely, the wiper frame 9 extends in length along the longitudinal direction A ending on the support body 15, in particular starting from the second end portion 7, which is opposite relative to the end 16.

More generally, the expression "cantilevered" can be understood with its meaning in building science, that is, as a coupling that does not leave degrees of freedom between the coupled bodies, so the coupled bodies cannot make mutual movements except for the deformation of the bodies themselves.

In practice, in particular at least with regard to the embodiment of figures 2-4, the wiper frame 9 appears as an extension of the support body 15 along the longitudinal direction A.

At least with regard to the embodiment of figures 2-4, the wiper frame 9 is attached at one end 18 of the support body 15 according to the longitudinal direction A.

Furthermore, in the embodiment of figures 2-4, between the support body 15 and the first end portion 5, according to the longitudinal direction A, the wiper 4 comprises an arm 19 having opposite ends 20, 21, attached to the first end portion 5 and to the support body 15, respectively. In particular, the end 21 is attached to an end 22 of the support body 15, which is opposite the end 18 according to the longitudinal direction A.

More in detail, as also directly and unequivocally revealed by the figures, the ends 20, 21 are opposite one another according to the longitudinal direction A.

Therefore, the arm 19 connects the first end portion 5 to the support body 15. As a result, the support body 15 is attached to the first end portion 5.

Like in the embodiment of figures 2-4, the fixing of the ends 20, 21 can take place in a manner similar to the fixing of the wiper frame 9 to the support body 15 described above, hence by means of a removable interference coupling or (as it will also be clearer from the further embodiments that will be described below) alternatively with threaded devices, snap coupling systems and the like.

Conveniently, the arm 19 is more flexible than the support body 15 and preferably also than the first end portion 5.

In particular, the support body 15, as well as independently the first end portion 5, are substantially rigid.

On the contrary, the arm 19 and independently the wiper frame 9 are generally flexible.

Therefore, the arm 19 increases the overall flexibility of the wiper 4 and facilitates the coupling of the first end portion 5 to the body 6, as well as the ability of the wiper 4 to deform in response to the variability in the curvature of the windshield 2.

Overall, according to the embodiment shown in figures 2-4, the first end portion 5, the arm 19, the support body 15 and the wiper frame 9 extend, in the order of listing, in series, i.e. one after the other, along the longitudinal direction A.

In particular, in the embodiment of figures 2-4, the wiper 4 consists of the first end portion 5, the arm 19, the support body 15 and the wiper blade 8.

Preferably, the wiper frame 9 internally defines or delimits a conduit portion 23 and comprises one or more orifices Y communicating with the conduit portion 23 and configured to dispense a cleaning fluid flowing in the conduit portion 23 onto the windshield 2 or, more precisely, onto the outer surface 3. More in detail, the conduit portion 23 extends along the longitudinal direction A through the wiper frame 9.

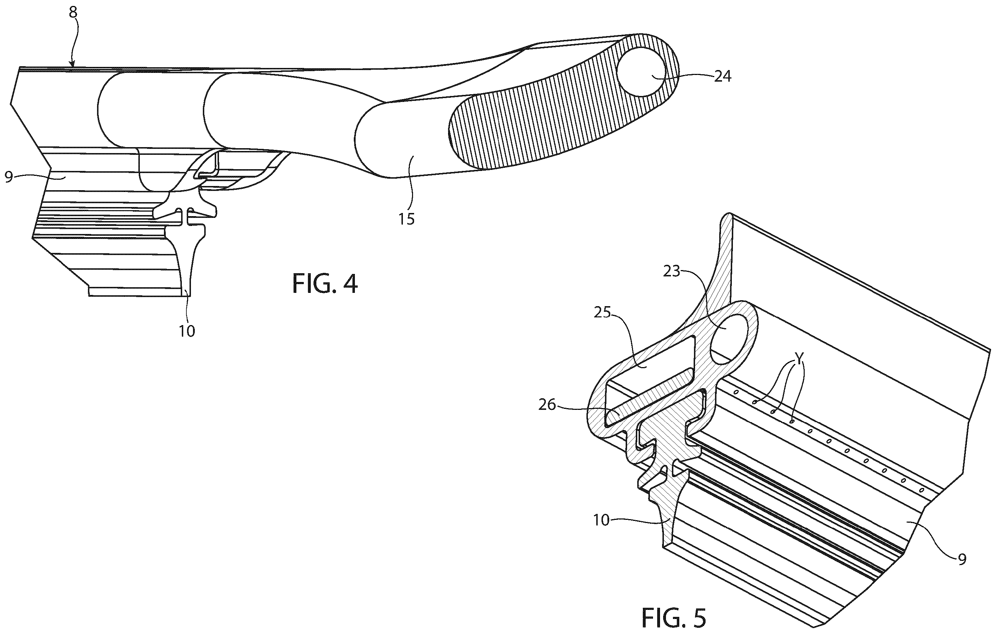

The conduit portion 23 is more generally part of a conduit 24, in particular obtained on the inside of the wiper 4 (in the embodiment of figures 2-4). The conduit 24 extends along the longitudinal direction A going from the wiper frame 9 through the support body 15 (figure 4), as well as preferably through the arm 19 (in the embodiment of figures 2-4) and also, if necessary, through the first end portion 5.

The conduit 24 or the conduit portion 23 can be connected to a dispensing device configured to dispense the cleaning liquid through the orifices Y by means of the conduit 24 or the conduit portion 23.

The dispensing device can comprise a tank for containing the cleaning liquid, as well as a pump device configured to pump the cleaning liquid from the tank towards the orifices Y through the conduit 24 or the conduit portion 23.

The dispensing device can be part of the vehicle 1, as well as optionally of the wiper 4.

In this way, in the embodiment of figures 2-4, the wiper 4 lacks external tubes, in particular external to any of the components of the wiper 4 to perform the function of dispensing the cleaning liquid onto the windshield 2.

Preferably, the flexibility of the wiper frame 9 is variable along the longitudinal direction A, especially, but not necessarily, decreasing towards the second end portion 7.

In other words, in particular (but not necessarily), the wiper frame 9 becomes or is increasingly rigid towards the second end portion 7.

More precisely, the flexibility of the wiper frame 9 decreases, namely the stiffness of the wiper frame 9 increases, from the end 16 towards the end defined by the second end portion 7, according to the longitudinal direction A.

In particular, the flexibility of the wiper frame 9 varies in a discrete manner; in other words, the wiper frame 9 comprises, along the longitudinal direction A, a plurality of segments in series with a respective distinct flexibility, specifically decreasing as the segments get closer to the second end portion 7.

According to the embodiment shown, the wiper frame 9 internally defines a chamber 25 that extends continuously along the longitudinal direction A.

For example, the cross sections in the longitudinal direction A of the chamber 25 could have respective variable dimensions, in particular decreasing along the longitudinal direction A towards the second end portion 7. By so doing, the flexibility of the wiper frame 9 would already be variable along the longitudinal direction.

Specifically, the dimensions of the cross sections are constant along the longitudinal direction A.

Herein, but also in the case of decreasing or more generally variable dimensions, the wiper frame 9 preferably comprises one or more elastic devices arranged within the chamber 25 to define the variable flexibility of the wiper frame 9.

The elastic devices cooperate with the rest of the wiper frame 9 adjusting the flexibility or stiffness thereof. For example, the elastic devices could be elastic bodies fixed to the rest of the wiper frame 9, having a distinct stiffness and arranged so as to at least partially or even totally fill the chamber 25 in the area of the aforementioned segments in series.

More in detail, the elastic devices comprise at least one elastic leaf 26 extending in length according to the longitudinal direction A within the chamber 25. The elastic leaf 26 is attached to the rest of the wiper frame 9 and in particular to the second end portion 7.

For example, the thickness of the elastic leaf 26 could be variable along its length, namely along the longitudinal direction A, particularly in an increasing manner towards the second end portion 7, so that its flexibility decreases towards the second end portion 7.

Alternatively or in addition, the wiper frame 9 comprises further elastic leaves 27, 28 overlapping in a packaged fashion the elastic leaf 26 and extending in length according to the longitudinal direction A within the chamber 25. The elastic leaves 26, 27, 28 are attached to one another and to the rest of the wiper frame 9 (in particular to the second end portion 7).

In practice, the leaves 26, 27, 28 define a leaf spring.

Preferably, the lengths of the leaves 26, 27, 28 are respectively distinct from one another, so that the number of overlapping leaves of the leaves 26, 27, 28 varies along the points of the longitudinal direction A, in particular in an increasing manner towards the second end portion 7.

In particular, all the leaves 26, 27, 28 have respective overlapping ends, more in particular in the area of the second end portion 7. In other words, the extensions of the leaves 26, 27, 28 all start from the same point in the longitudinal direction A, the point being located in particular in the area of the second end portion 7.

Hence, the leaf 26 is the longest of the leaves 26, 27, 28, so that a first segment of the wiper frame 9 has only the leaf 26 in the chamber 25. Then, starting from a second segment following the first segment according to the longitudinal direction A, the leaf 27 overlaps the leaf 26 in the chamber 25 and so on up to the last segment comprising the second end portion 7, in which all the leaves 26, 27, 28 overlap one another.

In other words, the overall thickness, i.e. the sum of the individual thicknesses, of the overlapping leaves 26, 27, 28 varies along the longitudinal direction A, in particular in an increasing manner, towards the second end portion 7.

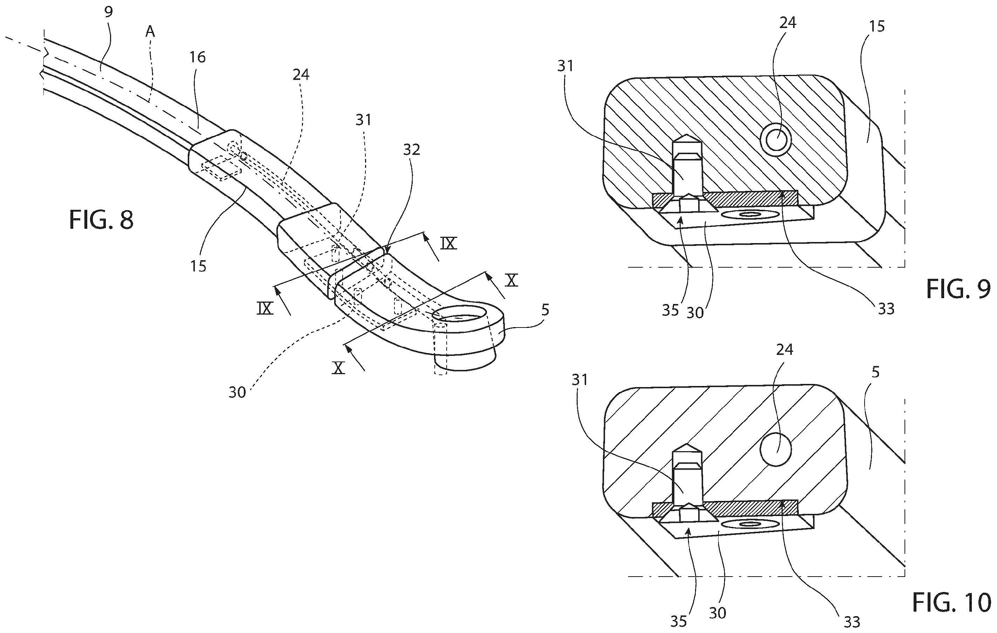

In the embodiment of figures 8-10, the arm 19 comprises or is more precisely defined by a plate or sheet 30 attached to both the support body 15 and the first end portion 5, in particular by means of threaded members 31, specifically screws (for example self-threading screws), divided in particular into first screws, which go through the plate 30 and the support body 15 for their mutual attachment, and second screws, which go through the plate 30 and the first end portion 5 for their mutual attachment.

The plate 30 extends longitudinally along the direction A between the support body 15 and the first end portion 5.

The plate 30 is more flexible than both the support body 15 and the first end portion 5, whereby it enables in particular (through its deformation) relative movements between the support body 15 and the first end portion 5.

Specifically, the wiper 4 preferably has a gap 32 defined between the support body 15 and the first end portion 5 according to the longitudinal direction A; the gap 32 is further delimited (in particular, at the top or at the bottom) by the plate 30 according to a direction that is transversal to the longitudinal direction A.

Therefore, the plate 30 bridges the gap 32 between the support body 15 and the first end portion 5 along or according to the longitudinal direction A.

In particular, herein, a portion of the conduit 24 extends in the area of the gap 32 or along the gap 32. More in particular, herein, the conduit 24 extends along the longitudinal direction A going from the wiper frame 9 through the support body 15 (figure 8), as well as preferably through the first end portion 5, in particular going from the support body 15 to the end portion 5 through or along the gap 32.

Preferably, the plate 30 comprises or is made of steel, in particular harmonised steel.

For example, herein, the support body 15 is made of rigid plastic.

Furthermore, conveniently, the plate 30 has a thickness (transversely or orthogonally to the direction A) that is smaller than the thickness of the support body 15 or of the first end portion 5.

Preferably, the ends of the plate 30 are housed in corresponding recesses 33 of the support body 15 and of the first end portion 5, respectively, so that, more preferably, the ends of the plate 30 have respective faces 35 flush with the outer surfaces of the support body 15 and of the first end portion 5.

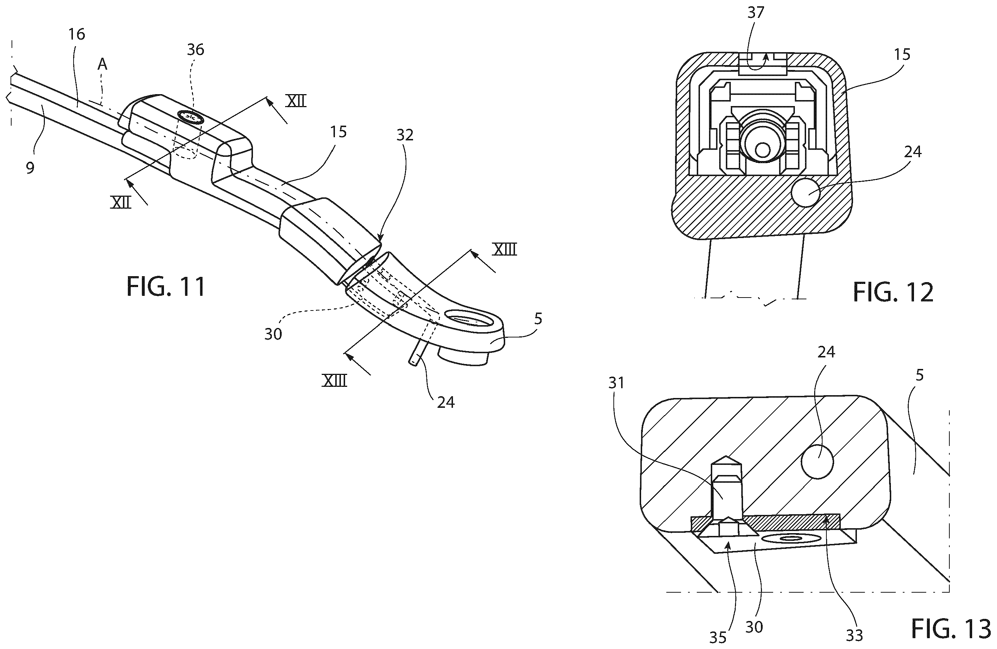

The embodiment of figures 11-13 basically differs (apart from the possible shape and/or materials of the components) from the embodiment of figures 8-10 for the fixing the end 16 or of the wiper frame 9 to the support body 15 by means of a snap coupling. In other words, the wiper frame 9 is attached to the support body 15 by means of the snap coupling.

In particular, the wiper frame 9 has at least one pin 36 that can be snap-coupled to a seat 37 on the support body 15. Alternatively, the support body 15 comprises two portions, which can be coupled to one another in a snapping manner (for example by means of the pin 36 of one of the portions and the seat 37 on the other portion), while the wiper frame 9 can be cantilevered to one of the portions (for example the one with the pin 36), in particular with an interference coupling like in the other embodiments described above or with other types of coupling, for example - again - with a snap coupling.

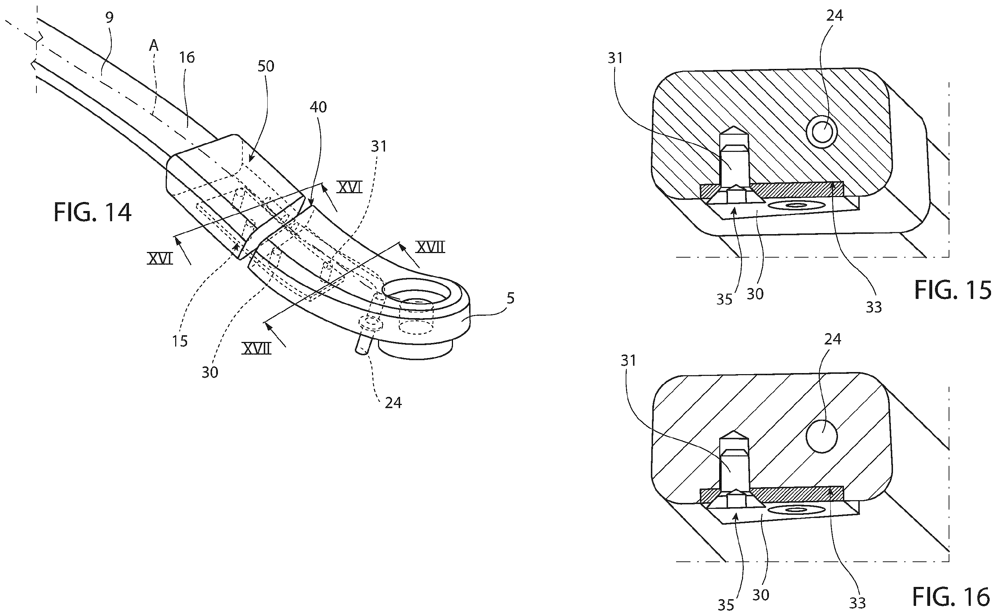

In the embodiment of figures 14-16, the support body 15 comprises the plate 30, so that the arm 19 is preferably absent.

According to a possible variant, the support body 15 is defined by the plate 30; according to another possible variant, the support body 15 comprises (although not necessarily) the plate 30 and a thickened body 50 having a greater thickness that the plate 30 and preferably also than the wiper frame 9. Herein, the wiper frame 9 is cantilevered to the thickened body 50, for example in ways similar to the coupling between the wiper frame 9 and the support body 15 described for the other embodiments.

In particular, the wiper frame 9 and the thickened body 50 could define one single body, i.e. they could be manufactured as one single piece.

For example, the wiper frame 9 is more flexible than the thickened body 50.

The term "thickened" is to be understood with respect to the plate 30, so it is not necessary that the thickness of the thickened body 50 is greater than that of the wiper frame 9. More in general, the thickened body 50 can also be more generically referred to as "body", for example without further adjectives.

The plate 30 is attached to both the wiper frame 9 (particularly the end 16) or the thickened body 50 and the first end portion 5, in particular by means of the threaded members 31, specifically screws (for example self-threading screws), divided in particular into first screws, which go through the plate 30 and the wiper frame 9 or the thickened body 50 for their mutual attachment, and second screws, which go through the plate 30 and the first end portion 5 for their mutual attachment.

The plate 30 extends longitudinally along the direction A between the wiper frame 9 or the thickened body 50 and the first end portion 5.

The plate 30 is more flexible than the first end portion 5, whereby it enables in particular (through its deformation) relative movements between the wiper frame 9 and the first end portion 5.

However, the plate 30 (being at least part of the support body 15) is less flexible than the wiper frame 9.

According to an alternative, the plate 30 could be more flexible than the wiper frame 9.

In the embodiment of figures 14-16, the wiper 4 preferably has a gap 40 defined between the wiper frame 9 or the thickened body 50 and the first end portion 5 according to the longitudinal direction A; the gap 40 is further delimited (in particular, at the top or at the bottom) by the plate 30 according to a direction that is transversal to the longitudinal direction A.

Therefore, the plate 30 bridges the gap 40 between the wiper frame 9 or the thickened body 50 and the first end portion 5 along or according to the longitudinal direction A.

In particular, herein, a portion of the conduit 24 extends in the area of the gap 40 or along the gap 40.

Furthermore, conveniently, the plate 30 has a thickness (transversely or orthogonally to the direction A) that is smaller than the thickness of the wiper frame 9.

Preferably, the ends of the plate 30 are housed in corresponding recesses of the wiper frame 9 or the thickened body 50 and of the first end portion 5, respectively, so that, more preferably, the ends of the plate 30 have respective faces 35 flush with the outer surfaces of the wiper frame 9 or the thickened body 50 and of the first end portion 5.

According to a different interpretation of the embodiment of figures 14-16, the support body 15 is integrated in or is part of the first end portion 5, so that the plate 30 is attached to both the wiper frame 9 (or the end 16) and the support body 15, in particular by means of threaded members 31, specifically screws (for example self-threading screws), divided in particular into first screws, which go through the plate 30 and the wiper frame 9 (or the end 16) for their mutual attachment, and second screws, which go through the plate 30 and the support body 15 for their mutual attachment.

Herein, The plate 30 extends longitudinally along the direction A between the wiper frame 9 (or the end 16) and the support body 15.

Herein, for example, the plate 30 could be more flexible than both the support body 15 and wiper frame 9, whereby it would enable in particular (through its deformation) relative movements between the support body 15 and the wiper frame 9.

Therefore, herein, the gap 40 is between the wiper frame 9 and the support body 15 according to the longitudinal direction A; the gap 40 is further delimited (in particular, at the top or at the bottom) by the plate 30.

Therefore, the plate 30 bridges the gap 40 between the wiper frame 9 and the first support body 15 along or according to the longitudinal direction A.

Preferably, the ends of the plate 30 are housed in corresponding recesses of the wiper frame 9 and of the support body 15, respectively, so that, more preferably, the ends of the plate 30 have respective faces 35 flush with the outer surfaces of the wiper frame 9 and of the support body 15.

According to this interpretation, the fixing of the wiper frame 9 to the support body 15 by means of the plate 30 is attributable to a cantilevered coupling of the wiper frame 9 to the support body 15, in particular by means of the plate 30.

Owing to the above, the advantages of the wiper 4 according to the invention are evident.

The flexibility of the wiper 4 is guaranteed by the flexible wiper frame 9 and even more so by the flexible arm 19.

Furthermore, the wiper 4 is an extremely simple solution with a low aesthetic impact, thanks to the fact that the wiper frame 9 protrudes cantilevered from the support body 15.

In fact, unlike typical known wipers, in which the wiper is connected to the rest of the wiper at an intermediate point, no joint elements or complex articulations are needed herein for the operation of the wiper 4.

Furthermore, the wiper 4 already integrates the conduit 24 for dispensing the cleaning liquid onto the windshield 2, so that it is not necessary to add external tubes that extend along the wiper 4.

In addition, the flexibility of the wiper frame 9, made variable and adjusted by means of the elastic leaves 26, 27, 28, makes it unnecessary to use the typical helical springs used in known wipers. In this way, the wiper 4 is even simpler and more effective than known wipers.

Owing to the above, moreover, it is evident that the wiper 4 according to the invention can be subjected to changes and variants, without going beyond the scope of protection defined by the claim.

In particular, numeral adjectives such as first, second and the like are used for the sole purpose of clarity and do not have a strictly limiting meaning.

Furthermore, the number and the shape of the components described and shown herein could be different, without any loss of generality.

## Claims

1. A wiper (4) for a motor vehicle (1), the wiper (4) extending along a longitudinal direction (A) from a first end portion (5) configured to be pivotally coupled to a body (6) of the motor vehicle (1) and ending with a second end portion (7) opposite the first end portion (5) according to the longitudinal direction (A), wherein the wiper (4) comprises a support body (15) and a wiper blade (8) comprising a wiper frame (9) and a blade (10) carried by the wiper frame (9) and suitable for sliding in contact on a window (2) of the motor vehicle (1), wherein the support body (15) is between the first end portion (5) and the wiper blade (8) according to the longitudinal direction (A), **characterized in that** the wiper frame (9) is cantilevered to the support body (15) according to the longitudinal direction (A), comprises the second end portion (7), and is more flexible than the support body (15).

2. The wiper according to claim 1, further comprising an arm (19) between the support body (15) and the first end portion (5) according to the longitudinal direction (A), the arm (19) connecting the first end portion (5) to the support body (15), wherein the arm (19) is more flexible than the support body (15) and has opposite ends (20, 21) attached to the first end portion (5) and the support body (15), respectively.

3. The wiper according to claim 2, consisting of the first end portion (5), the arm (19), the support body (15), and the wiper blade (8).

4. The wiper according to claim 2 or 3, wherein the arm (19) comprises a plate (30) extending longitudinally along the longitudinal direction (A) and, in particular, attached to the first end portion (5) and to the support body (15) by means of threaded members (31).

5. The wiper according to claim 4, comprising a gap (32) defined between the support body (15) and the first end portion (5) according to the longitudinal direction (A) and further delimited by the plate (30) according to a direction that is transversal to the longitudinal direction (A).

6. The wiper according to claim 1, wherein the support body (15) comprises a plate (30) extending longitudinally along the longitudinal direction (A) between the wiper frame (9) and the first end portion (5), the plate (30) being attached to the wiper frame (9) and to the first end portion (5), in particular by means of threaded members (31).

7. The wiper according to claim 6, further comprising a gap (40) defined between the wiper frame (9) and the first end portion (5) according to the longitudinal direction (A) and further delimited by the plate (30) according to a direction that is transversal to the longitudinal direction (A).

8. The wiper according to any one of the preceding claims, wherein the wiper frame (9) internally defines a conduit portion (23) and comprises one or more dispensing orifices (Y) communicating with the conduit portion (23) and configured to dispense a cleaning fluid flowing into the conduit portion (23) on the window (2) of the motor vehicle (1).

9. The wiper according to any one of the preceding claims, wherein the wiper frame (9) has a variable flexibility along the longitudinal direction (A).

10. The wiper according to claim 9, wherein the flexibility of the wiper frame (9) is decreasing along the longitudinal direction (A) toward the second end portion (7).

11. The wiper according to claim 9 or 10, wherein the wiper frame (9) internally defines a chamber (25) extending continuously along the longitudinal direction (A), the wiper frame (9) further comprising elastic means (26, 27, 28) arranged within the chamber (25) to define the variable flexibility of the wiper frame (9).

12. The wiper frame according to claim 11, wherein the elastic means (26, 27, 28) comprise one or more elastic leaves (26, 27, 28) overlapping in a packaged fashion and extending in length according to the longitudinal direction within the chamber.

13. The wiper according to claim 12, wherein the overall thickness of the one or more leaves (26, 27, 28) and/or the number of overlapping leaves (26, 27, 28) is increasing along the longitudinal direction (A) toward the second end portion (7).

14. The wiper according to any one of the preceding claims, wherein the wiper frame (9) is attached to the support body (15) by means of a snap coupling.

15. A motor vehicle (1) comprising a body (5), a window (2), and a wiper (4) according to any one of the preceding claims, wherein the first end portion (5) is pivotally coupled to the body (6), and wherein the blade (10) is arranged in contact with the window (2), for example defined by a windshield.
